# EUROPÄISCHE PATENTSCHRIFT

(11) **EP 0 784 764 B1**
(45) Veröffentlichungstag und Bekanntmachung des Hinweises auf die Patenterteilung: **22.07.1998**
(21) Anmeldenummer: 95935406.9
(22) Anmeldetag: 29.09.1995
(51) Int. Cl.: F16H 57/04

(54) **AUTOMATGETRIEBE MIT EINER VERDRÄNGERPUMPE**
AUTOMATIC GEARBOX WITH A POSITIVE-DISPLACEMENT PUMP
BOITE DE VITESSES AUTOMATIQUE POURVUE D'UNE POMPE DE REFOULEMENT

(30) Priorität: 05.10.1994 DE 4435593
(43) Veröffentlichungstag der Anmeldung: 23.07.1997
(73) Patentinhaber: ZF FRIEDRICHSHAFEN Aktiengesellschaft, 88038 Friedrichshafen (DE)
(72) Erfinder: REICHENMILLER, Michael, D-73550 Waldstetten (DE); ROWE, Gerald, D-99131 Lindau (DE); LACHER, Franz, D-88074 Meckenbeuren (DE); SCHMID, Wolf-Dieter, D-88131 Lindau (DE)
(86) Internationale Anmeldenummer: EP9503850
(87) Internationale Veröffentlichungsnummer: WO9611346

(56) Entgegenhaltungen:
- DE-A- 1 528 568
- DE-A- 4 139 611

## Beschreibung

Die Erfindung betrifft ein Automatgetriebe, insbesondere ein stufenloses Automatgetriebe für Kraftfahrzeuge, mit einer Verdrängerumpe für die Versorgung eines hydrodynamischen Wandlers, einer Schmiereinrichtung und von Steuer- und Betätigungseinrichtungen des Automatgetriebes über eine Anzahl von Steuerkanälen. Dabei weist die Verdrängerpumpe einen radial außerhalb einer Anzahl von Auslaßventilen liegenden Sammelraum auf, der als Ringraum ausgebildet ist und der die Verdrängerpumpe umgreift. Der Ringraum ist zwischen einem Pumpengehäuse und einem Wandlergehäuse des Wandlers angeordnet.

Ein derartiges Automatgetriebe ist bekannt aus der DE-A1 41 39 611. An derartige Getriebe werden hohe Anforderungen im Hinblick auf einen niedrigen Geräuschpegel gestellt. Geräusche treten bei derartigen Getrieben unter anderem durch Pulsationen der Verdrängerpumpe und dadurch erzeugte Schwingungen auf.

Eine Möglichkeit, die Geräusche in Automatgetrieben niedrig zu halten, liegt deshalb in der Dämpfung der Pulsationen. Bei dem bekannten Automatgetriebe ist zu diesem Zweck in einem Pumpengehäuse eine radial außenliegende Sammelringnut bzw. ein als Ringraum ausgebildeter Sammelraum vorgesehen, der bis zu einem gewissen Maße dämpfend auf die Pulsationen wirkt. Eine Verbesserung dieser Dämpfung durch Vergrößerung des Sammelraumes wäre wünschenswert. Einer solchen Vergrößerung sind jedoch Grenzen gesetzt, da der zylindrische Einpaß in dem Wandlergehäuse, in dem das Pumpengehäuse gehalten ist, in seinem Durchmesser nicht beliebig vergrößert werden kann. Diese Grenzen sind dadurch definiert, daß Peripherie-Aggregate, wie beispielsweise ein Differential, oder Steuer- und Druckkanäle aus Konstruktions- und Funktionsgründen sehr nahe an der Verdrängerpumpe angeordnet sein müssen.

Der Erfindung liegt die Aufgabe zugrunde, die entstehenden Geräusche durch erhöhte Dämpfung der Pulsationen der Verdrängerpumpe zu verringern.

Diese Aufgabe wird durch das in den Ansprüchen 1 und 4 gekennzeichnete Automatgetriebe gelöst. Dazu wird der Ringraum als Tilgerraum ausgebildet, d. h. sein Querschnitt und sein Volumen werden erheblich vergrößert. Dies wird dadurch erreicht, daß der Ringraum aus dem Pumpengehäuse in eine Ausnehmung des Wandlergehäuses oder in eine Ausnehmung eines Pumpendeckels, der an das Pumpengehäuse angrenzt, verlegt wird. Der Tilgerraum befindet sich dann nahezu vollständig außerhalb des Pumpengehäuses. Jedoch kann ein kleines Teilvolumen des Tilgerraumes in konstruktionsbedingt vorhandenen Räumen des Pumpengehäuses ebenso zur Dämpfung genutzt werden.

Vorteilhafte und zweckmäßige Ausgestaltungen der Erfindung sind in den Unteransprüchen angegeben. Die Erfindung ist jedoch nicht auf die Merkmalskombinationen der Ansprüche beschränkt. Für den Fachmann ergeben sich weitere sinnvolle Kombinationsmöglichkeiten von Ansprüchen und einzelnen Anspruchsmerkmalen aus der Aufgabenstellung.

Die Erfindung kann insbesondere für Automatgetriebe angewendet werden, bei denen die Verdrängerpumpe eine Radialkolbenpumpe ist. Radialkolbenpumpen haben im allgemeinen eine höhere Pulsation als Zahnradpumpen. Radialkolben bieten jedoch die Möglichkeit eines höheren Druckniveaus und einer Saugregelung. Durch die erfindungsgemäße Ausgestaltung des Tilgerraumes können Radialkolbenpumpen vorteilhafter, d. h. mit weniger Geräuschen und Schwingungen, in Automatgetrieben verwendet werden.

Der Ringraum kann in einem einteiligen Wandlergehäuse angeordnet sein, wenn das Wandlergehäuse beispielsweise im Sandgußverfahren hergestellt wird. In vergleichbarer Weise kann der Ringraum in dem Pumpendeckel angeordnet sein.

Für eine Großserienfertigung ist es jedoch zweckmäßig, das Wandlergehäuse zu teilen. In diesem Fall wird der Ringraum durch die Ausnehmung in dem Wandlergehäuse, das Pumpengehäuse und einen separaten Pumpendeckel begrenzt. Dabei werden die radial äußere Begrenzungswand und die axialen Begrenzungswände des Ringraumes durch das Wandlergehäuse und den Pumpendeckel gebildet. Das Wandlergehäuse kann in diesem Fall im Druckgußverfahren hergestellt werden.

Durch die Art der Anordnung des Ringraumes in dem Wandlergehäuse kann der Ringraum eine unsymmetrische Form, d. h. eine von einem Kreisring abweichende Form, aufweisen. Das Volumen des Ringraumes kann in die durch die Konstruktion des Automatgetriebes gegebenen Freiräume gelegt werden. Im Bereich von Peripherie-Aggregaten, wie beispielsweise einem Differential, oder von Kanaldurchführungen, kann der Ringraum an seinem Umfang Einschnürungen bzw. Verringerungen seines Querschnittes aufweisen. An anderen Stellen dagegen kann der Ringraum Aufweitungen aufweisen.

Bei bisher bekannten Automatgetrieben weist das Wandlergehäuse einen im wesentlichen zylindrischen Fortsatz auf, mit dessen freiem Ende ein Teil einer Kupplung bzw. einer Bremse des Automatgetriebes verbunden ist. Im vorliegenden Fall, bei dem der Ringraum "zweigeteilt" ausgebildet ist, d. h. durch das Wandlergehäuse und den Pumpendeckel begrenzt ist, wird der zylindrische Fortsatz an den Pumpendeckel gelegt. Das Teil, an dem die Verbindungselemente zu der Kupplung bzw. der Bremse liegen, wird dadurch wesentlich verkleinert und kann deshalb einfacher und kostengünstiger bearbeitet werden.

Wenn das Pumpengehäuse gegenüber dem Pumpendeckel zentriert ist, so wird zur Abdichtung zwischen diesen beiden Teilen vorteilhafterweise eine Flachdichtung verwendet. Zwischen dem Wandlergehäuse und dem Pumpengehäuse wird zur Abdichtung eine Runddichtung verwendet, die in einer radial offenen Ringnut des Wandlergehäuses bzw. des Pumpengehäuses liegt.

In der Beschreibung und in den Ansprüchen sind nur einige Kombinationsmöglichkeiten in bezug auf die Ausgestaltung und Anwendung ausführlich dargestellt. Dem Leser wird empfohlen, jede Aussage auch isoliert einzeln zu betrachten und ihre Brauchbarkeit in anderen Zusammenhängen und Kombinationen zu überprüfen, dies insbesondere in Zusammenhang mit dem angeführten Stand der Technik. Naheliegende Möglichkeiten ergeben sich für den Fachmann, wenn er die geschilderten Maßnahmen wegen der damit verbundenen Vorteile benutzt.

Im folgenden wird die Erfindung anhand zweier in der Zeichnung dargestellter Ausführungsbeispiele näher erläutert. Es zeigen:
- Fig. 1: einen Teil-Längsschnitt durch das erfindungsgemäße Automatgetriebe im Bereich der Verdrängerpumpe mit einem "zweigeteilten" Tilgerraum und
- Fig. 2: einen Ausschnitt aus der Fig. 1 in einem zweiten Ausführungsbeispiel mit einem "einteiligen" Tilgerraum.

Eine Verdrängerpumpe in der Form einer Radialkolbenpumpe 1 ist in einem Wandlergehäuse 2 angeordnet. Das Wandlergehäuse 2 enthält außerdem eine Anfahreinrichtung in der Form eines hydrodynamischen Wandlers 3 mit einem Leitrad 4, einem Turbinenrad 5 und einem Pumpenrad 6.

Die Radialkolbenpumpe 1 schließt sich direkt an den Wandler 3 an. Auf der anderen Seite der Radialkolbenpumpe 1 liegt das eigentliche Getriebe, von dem nur eine Schaltbremse 7 dargestellt ist.

Das Leitrad 4 ist auf einer gehäusefesten Leitradwelle 8 gelagert. Auf der Leitradwelle 8 ist eine Exzentergleitbuchse 10 der Radialkolbenpumpe 1 gelagert. Die Exzentergleitbuchse 10 wird durch einen Zapfen 11 angetrieben, der als axialer Fortsatz einer mit dem Pumpenrad 6 verbundenen Pumpenwelle 12 ausgebildet ist. Mit der Exzentergleitbuchse 10 stehen über wenigstens einen Gleitring 13 mehrere Kolben 14 in Verbindung. Die Kolben 14 werden durch die Kraft von Federn 15 mit ihrem radial innenliegenden Kolbenboden in Anlage an dem Gleitring 13 gehalten. Die Kolben 14 gleiten in Zylinderbohrungen 16 eines Pumpengehäuses 17. Die Zylinderbohrungen 16 sind durch Stopfen 18 verschlossen. Jeder Stopfen 18 ist mit einer Bohrung 20 versehen. An jedem Stopfen 18 wird ein Rückschlagventil dadurch gebildet, daß alle Stopfen 18 von einer gemeinsamen Bandfeder 21 umfaßt sind. Die Bandfeder 21 dichtet die Bohrungen 20 gegenüber einem radial außerhalb der Stopfen liegenden, als Ringraum 22 ausgebildeten Tilgerraum ab.

Der Ringraum 22 wird in dem Ausführungsbeispiel durch eine Ausnehmung 23 des Wandlergehäuses 2, durch das Pumpengehäuse 17 und einen separaten Pumpendeckel 24 begrenzt. Der Pumpendeckel 24 ist benachbart zu dem Pumpengehäuse 17 in Richtung auf das eigentliche Getriebe. Der Ringraum 22 liegt damit in der Hauptsache in der Ausnehmung 23 des Wandlergehäuses und damit nahezu vollständig außerhalb des Pumpengehäuses 17. Dadurch kann der Ringraum 22 in alle konstruktionsbedingt freien, zur Radialkolbenpumpe 1 benachbarten Räume des Automatgetriebes ausgedehnt werden. Lediglich im Bereich von nicht dargestellten Peripherie-Aggregaten, wie beispielsweise einem Differential oder im Bereich von Kanaldurchführungen, weist der Ringraum Einschnürungen bzw. Verringerungen seines Querschnittes auf.

Der Pumpendeckel 24 weist einen axial gerichteten, im wesentlichen zylindrischen Fortsatz 25 auf, mit dessen freiem, dem Pumpengehäuse 17 abgewandten Ende 26 ein Teil der Schaltbremse 7 verbunden ist.

Der Ringraum 22 ist einerseits zwischen dem Wandlergehäuse 2 und dem Pumpengehäuse 17 durch eine, in einer radial offenen Ringnut des Wandlergehäuses 2 oder des Pumpengehäuses 17 liegende Runddichtung 27 und andererseits zwischen dem Pumpengehäuse 17 und dem Pumpendeckel 24 durch eine Flachdichtung 28 abgedichtet. Eine weitere Dichtung befindet sich zwischen dem Wandlergehäuse 2 und dem Pumpendeckel 24.

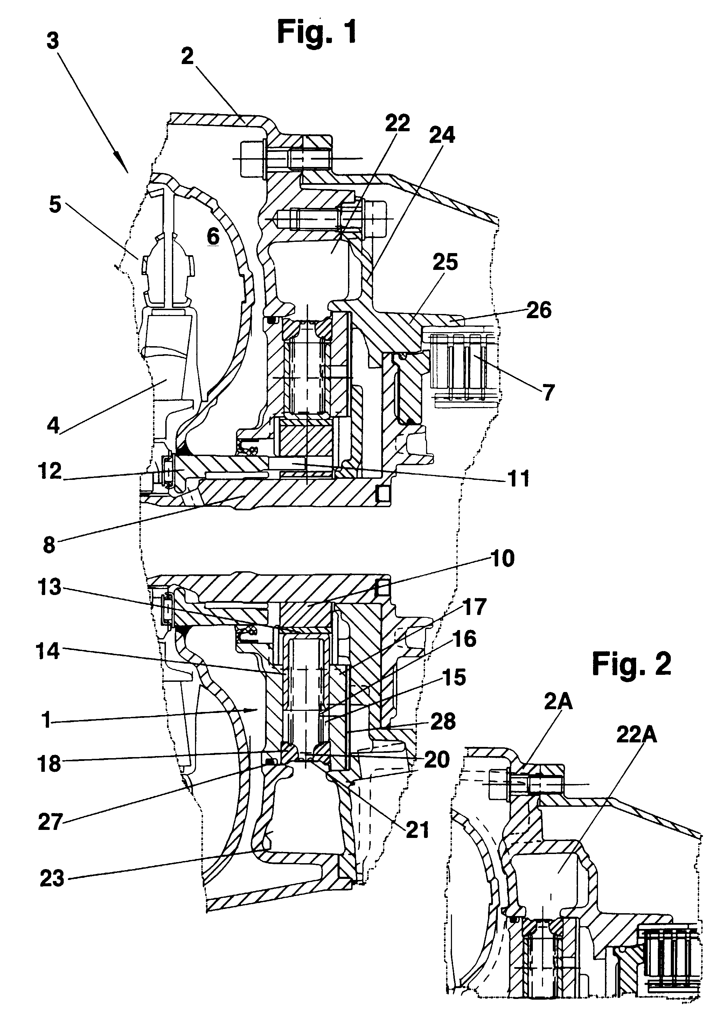

In dem bevorzugten Ausführungsbeispiel ist der Ringraum 22 "zweigeteilt", d. h. durch das Wandlergehäuse 2 und den Pumpendeckel 24 begrenzt. Der Tilgerraum kann gemäß Fig. 2 mit gleichen Vorteilen bei der Größe und Gestaltung des Raumes, jedoch mit gewissen Abstrichen hinsichtlich der Fertigung, als "einteiliger" Ringraum 22A in dem Wandlergehäuse 2A oder in dem Pumpendeckel 24 ausgebildet sein. Die Anordnung des Ringraumes in dem Pumpendeckel 24 entspricht der Ausbildung in dem Wandlergehäuse 2A und ist deshalb nicht gesondert dargestellt.

### Bezugszeichen

- 1: Radialkolbenpumpe
- 2, 2A: Wandlergehäuse
- 3: Wandler
- 4: Leitrad
- 5: Turbinenrad
- 6: Pumpenrad
- 7: Schaltbremse
- 8: Leitradwelle
- 9: -
- 10: Exzentergleitbuchse
- 11: Zapfen
- 12: Pumpenwelle
- 13: Gleitring
- 14: Kolben
- 15: Feder
- 16: Zylinderbohrung
- 17: Pumpengehäuse
- 18: Stopfen
- 19: -
- 20: Bohrung
- 21: Bandfeder
- 22, 22A: Ringraum
- 23: Ausnehmung
- 24: Pumpendeckel
- 25: Fortsatz
- 26: Ende von 25
- 27: Runddichtung
- 28: Flachdichtung

## Patentansprüche

1. Automatgetriebe, insbesondere stufenloses Automatgetriebe für Kraftfahrzeuge, mit einer Verdrängerpumpe für die Versorgung eines hydrodynamischen Wandlers (3), einer Schmiereinrichtung und von Steuer- und Betätigungseinrichtungen des Automatgetriebes über eine Anzahl von Steuerkanälen,
- wobei die Verdrängerpumpe einen radial außerhalb einer Anzahl von Auslaßventilen liegenden Sammelraum aufweist, der als Ringraum (22) ausgebildet ist und der die Verdrängerpumpe umgreift;
- wobei der als Tilgerraum dienende Ringraum (22) zwischen einem Pumpengehäuse (17) und einem Wandlergehäuse (2) des Wandlers (3) angeordnet ist,
dadurch **gekennzeichnet**, daß der Ringraum (22) im wesentlichen in einer Ausnehmung (23) des Wandlergehäuses (2) und damit im wesentlichen außerhalb des Pumpengehäuses (17) angeordnet ist und daß der Ringraum (22) in axialer Richtung durch das Wandlergehäuse (2) und/oder den Pumpendeckel (24) begrenzt ist.

2. Automatgetriebe nach Anspruch 1, dadurch **gekennzeichnet,** daß die Verdrängerpumpe eine Radialkolbenpumpe (1) ist.

3. Automatgetriebe nach Anspruch 2, dadurch **gekennzeichnet**, daß der Ringraum (22A) nur durch das Pumpengehäuse (17) und das Wandlergehäuse (2A) begrenzt ist. (Fig. 2)

4. Automatgetriebe, insbesondere stufenloses Automatgetriebe für Kraftfahrzeuge, mit einer Verdrängerpumpe für die Versorgung eines hydrodynamischen Wandlers (3), einer Schmiereinrichtung und von Steuer- und Betätigungseinrichtungen des Automatgetriebes über eine Anzahl von Steuerkanälen,
- wobei die Verdrängerpumpe einen radial außerhalb einer Anzahl von Auslaßventilen liegenden Sammelraum aufweist, der als Ringraum (22) ausgebildet ist und der die Verdrängerpumpe umgreift;
- wobei der als Tilgerraum dienende Ringraum (22) zwischen einem Pumpengehäuse (17) und einem Wandlergehäuse (2) des Wandlers (3) angeordnet ist,
dadurch **gekennzeichnet**, daß der Ringraum (22) im wesentlichen in einer Ausnehmung eines an das Pumpengehäuse (17) angrenzenden Pumpendeckels (24) liegt und nur durch das Pumpengehäuse (17) und den Pumpendekkel (24) begrenzt ist.

5. Automatgetriebe nach Anspruch 2, dadurch **gekennzeichnet**, daß der Ringraum (22) durch die Ausnehmungen des Wandlergehäuses (2), des Pumpengehäuses (17) und/oder eines separaten Pumpendeckels (24) begrenzt ist.

6. Automatgetriebe nach Anspruch 5, dadurch **gekennzeichnet**, daß die radial äußere Begrenzungswand und die axialen Begrenzungswände des Ringraumes (22) durch das Wandlergehäuse (2) und den Pumpendekkel (24) gebildet sind.

7. Automatgetriebe nach einem der Ansprüche 1 bis 6, dadurch **gekennzeichnet,** daß der Ringraum (22) eine von einem Kreisring abweichende Form aufweist.

8. Automatgetriebe nach Anspruch 7, dadurch **gekennzeichnet**, daß der Ringraum (22) an seinem Umfang Erweiterungen und Einschnürungen bzw. Verringerungen seines Querschnittes aufweist.

9. Automatgetriebe nach Anspruch 8, dadurch **gekennzeichnet**, daß die Einschnürungen bzw. Verringerungen des Querschnittes des Ringraumes (22) im Bereich von neben dem Ringraum (22) angeordneten Peripherieaggregaten oder Kanaldurchführungen liegen.

10. Automatgetriebe nach Anspruch 6, dadurch **gekennzeichnet**, daß der Pumpendeckel (24) einen axialen, im wesentlichen zylindrischen Fortsatz (25) aufweist, mit dessen freiem, dem Pumpengehäuse (7) abgewandten Ende (26) ein Teil einer Kupplung bzw. einer Bremse (7) des Automatgetriebes verbunden ist.

11. Automatgetriebe nach einem der Ansprüche 1 bis 10, dadurch **gekennzeichnet**, daß der Ringraum (22) einerseits zwischen dem Wandlergehäuse (2) und dem Pumpengehäuse (17) durch eine in einer radial offenen Ringnut des Wandlergehäuses (2) oder des Pumpengehäuses (17) liegende Runddichtung (27) und andererseits zwischen dem Pumpengehäuse (17) und dem Pumpendeckel (24) durch eine Flachdichtung (28) abgedichtet ist.

## Claims

1. Automatic gearbox, more particularly a continuously variable automatic gearbox for motor vehicles, with a displacement pump for supplying a hydrodynamic converter (3), a lubricating device and control and actuation devices of the automatic gearbox via a plurality of control channels,
- the displacement pump comprising a collecting chamber, which lies radially outside a plurality of outlet valves, is constructed as an annular space (22) and surrounds the displacement pump;
- the annular space (22) acting as an absorption space being arranged between a pump housing (17) and a converter housing (2) of the converter (3),
characterised in that the annular space (22) is substantially arranged in a recess (23) in the converter housing (2) and therefore substantially outside the pump housing (17), and the annular space (22) is bounded in the axial direction by the converter housing (2) and/or the pump cover (24).

2. Automatic gearbox according to claim 1, characterised in that the displacement pump is a radial piston pump (1).

3. Automatic gearbox according to claim 2, characterised in that the annular space (22A) is only bounded by the pump housing (17) and the converter housing (2A). (Fig. 2)

4. Automatic gearbox, more particularly a continuously variable automatic gearbox for motor vehicles, with a displacement pump for supplying a hydrodynamic converter (3), a lubricating device and control and actuation devices of the automatic gearbox via a plurality of control channels,
- the displacement pump comprising a collecting chamber, which lies radially outside a plurality of outlet valves, is constructed as an annular space (22) and surrounds the displacement pump;
- the annular space (22) acting as an absorption space being arranged between a pump housing (17) and a converter housing (2) of the converter (3),
characterised in that the annular space (22) is substantially arranged in a recess in a pump cover (24) adjoining the pump housing (17) and is bounded only by the pump housing (17) and the pump cover (24).

5. Automatic gearbox according to claim 2, characterised in that the annular space (22) is bounded by the recesses in the converter housing (2), the pump housing (17) and/or a separate pump cover (24).

6. Automatic gearbox according to claim 5, characterised in that the radially outer boundary wall and the axial boundary walls of the annular space (22) are formed by the converter housing (2) and the pump cover (24).

7. Automatic gearbox according to one of claims 1 to 6, characterised in that the annular space (22) has a shape deviating from a circular ring.

8. Automatic gearbox according to claim 7, characterised in that, at its circumference, the annular space (22) comprises widened sections and constrictions or narrowed sections in its cross section.

9. Automatic gearbox according to claim 8, characterised in that the constrictions or narrowed sections in the cross section of the annular space (22) lie in the region of peripheral aggregates or channel ducts arranged adjacent the annular space (22).

10. Automatic gearbox according to claim 6, characterised in that the pump cover (24) comprises an axial, substantially cylindrical extension (25), with whose free end (26) remote from the pump housing (7) a part of a coupling or of a brake (7) of the automatic gearbox is connected.

11. Automatic gearbox according to one of claims 1 to 10, characterised in that the annular space (22) is sealed on the one hand between the converter housing (2) and the pump housing (17) by an annular seal (27) lying in a radially open annular groove in the converter housing (2) or in the pump housing (17) and on the other hand between the pump housing (17) and the pump cover (24) by a flat gasket (28).

## Revendications

1. Transmission automatique, notamment transmission automatique à réglage continu pour véhicules automobiles, comportant une pompe volumétrique destinée à l'alimentation d'un convertisseur hydrodynamique (3), d'un dispositif de lubrification et de dispositifs de commande et d'actionnement de la transmission automatique par l'intermédiaire d'un nombre de conduites de commande,
- où la pompe volumétrique comporte une chambre collectrice située radialement à l'extérieur d'un nombre de soupapes de sortie, cette chambre étant formée par un espace annulaire (22) qui enveloppe la pompe volumétrique;
- où l'espace annulaire (22) servant d'espace d'amortissement est disposé entre un corps de pompe (17) et un boîtier (2) de convertisseur (3),
**caractérisée** en ce que l'espace annulaire (22) est disposé essentiellement dans un creux (23) du boîtier de convertisseur (2) et donc essentiellement en dehors du corps de pompe (17), et en ce que l'espace annulaire (22) est délimité dans le sens axial par le boîtier de convertisseur (2) et/ou le couvercle de la pompe (24).

2. Transmission automatique selon la revendication 1, **caractérisée** en ce que la pompe volumétrique est une pompe à pistons radiaux (1).

3. Transmission automatique selon la revendication 2, **caractérisée** en ce que l'espace annulaire (22A) n'est limité que par le corps de la pompe (17) et le boîtier de convertisseur (2A) (Fig. 2).

4. Transmission automatique, notamment transmission automatique à réglage continu pour véhicules automobiles, comportant une pompe volumétrique destinée à l'alimentation d'un convertisseur hydrodynamique (3), d'un dispositif de lubrification et de dispositifs de commande et d'actionnement de la transmission automatique par l'intermédiaire d'un nombre de conduites de commande,
- où la pompe volumétrique comporte une chambre collectrice située radialement à l'extérieur d'un nombre de soupapes de sortie, cette chambre étant formée par un espace annulaire (22) qui enveloppe la pompe volumétrique;
- où l'espace annulaire (22) servant d'espace d'amortissement est disposé entre un corps de pompe (17) et un boîtier (2) de convertisseur (3),.
**caractérisée** en ce que l'espace annulaire (22) est disposé essentiellement dans un creux (23) adjacent au corps de la pompe (17) du couvercle de la pompe (24) et n'est délimité que par le corps de la pompe (17) et le couvercle de la pompe (24).

5. Transmission automatique selon la revendication 2, **caractérisée** en ce que l'espace annulaire (22) est délimité par les creux du boîtier du convertisseur (2), le corps de la pompe (17) et/ou un couvercle de pompe séparé (24).

6. Transmission automatique selon la revendication 5, **caractérisée** en ce que la paroi de limitation radiale extérieure et les parois de limitation axiales de l'espace annulaire (22) sont formées par le boîtier du convertisseur (2) et le couvercle de la pompe (24).

7. Transmission automatique selon l'une des revendications 1 à 6, **caractérisée** en ce que l'espace annulaire (22) a une forme différente d'un anneau de cercle.

8. Transmission automatique selon la revendication 7, **caractérisée** en ce que l'espace annulaire (22) présente à sa circonférence des extensions et rétrécissements, respectivement des réductions de sa section.

9. Transmission automatique selon la revendication 8, **caractérisée** en ce que les rétrécissements, respectivement les réductions de la section de l'espace annulaire (22) se trouvent dans la zone d'appareils périphériques ou de traversées de conduites agencés à coté de l'espace annulaire (22).

10. Transmission automatique selon la revendication 6, **caractérisée** en ce que le couvercle de la pompe (24) présente un prolongement cylindrique axial (25), l'extrémité libre (26) opposée au corps de pompe (7) de ce prolongement étant reliée à une partie d'un embrayage, respectivement d'un frein (7) de la transmission automatique.

11. Transmission automatique selon l'une des revendications 1 à 10, **caractérisée** en ce que l'espace annulaire (22) est étanchéifié d'une part entre le boîtier du convertisseur (2) et le corps de la pompe (17) par un joint torique (27) posé dans une rainure annulaire radialement ouverte du boîtier de convertisseur (2) ou du corps de la pompe (17), et d'autre part par une garniture plate (28) entre le corps de la pompe (17) et le couvercle de la pompe (24).
